# EUROPEAN PATENT APPLICATION

(11) **EP 4 579 304 A1**
(43) Date of publication of application: **02.07.2025**
(21) Application number: 24218828.2
(22) Date of filing: 10.12.2024
(51) Int. Cl.: G02B 6/44

(54) **OPTICAL FIBER CABLE WITH MULTIFIBRE TIGHT-BUFFERED UNIT**

(30) Priority: 27.12.2023 IN 202311088955
(71) Applicant: Sterlite Technologies Limited, Gurugram, Haryana 122102 (IN)
(72) Inventor: SAHA, Swarnava, 122102 Gurugram (IN)
(74) Representative: Valet Patent Services Limited

(57) **Abstract**

Disclosed is an optical fiber cable (100, 200, 300) comprising: a plurality of optical fibers (102); a thermoplastic layer (104) extruded over the plurality of optical fibers (102) to form an optical unit (108) such that the thermoplastic layer (104) contacts a surface area in a range of 50% to 95% of each optical fiber of the plurality of optical fibers (102); and a sheath (106) that surrounds the optical unit (108).

## Description

### TECHNICAL FIELD

Embodiments of the present disclosure relate to the field of optical telecommunication systems, and more particularly, relate to an optical fiber cable with multi-fibre tight-buffered unit.

This application claims the benefit of Indian Application No. "IN202311088955" titled "OPTICAL FIBER CABLE WITH MULTIFIBRE TIGHT-BUFFERED UNIT" filed by the applicant on 27 December 2023, which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking. An optical fiber cable generally has a cable core comprising one or more optical fibers and a sheath surrounding the cable core.

Conventionally, optical fiber cables where more than one optical fiber are required in a single unit, the optical fibers are loosely enclosed in tubes such as buffer tube, micromodules, and the like. Sleeved micro module buffer layer having a thickness of less than 100 micrometres (µm) is unable to protect the optical fibers from aerial environment condition in last mile connectivity cable. Moreover, gel locked micro-module cannot be used in last mile home connectivity cables due to safety concerns and the optical fibers housed in dry micro-module are not able to block the water penetration inside the module. The optical fibers housed inside the sleeved module are unable to be coupled with other cable components i.e., fiber retraction under maximum overhead environmental load which leads to unwanted fiber break.

Conventional optical fiber cables for indoor use typically provide a convenient termination for standard single-fiber connectors, such as ST, SC or LC connectors, often using tight buffered optical fiber with an outer diameter of 900 microns. However, multifiber connectors are becoming increasingly popular in order to save space and installation labor. These connectors use multi-fiber "MT" ferrules. 12-fiber multifiber connectors with a "MT" type ferrule can be used for connection of twelve 250 micron fibers in the same space normally needed for 2 traditional SC connections, or 3 traditional LC connections.

These types of multifiber connectors are designed to work with flat optical ribbons. However, use of flat ribbons in cable may lead to undesirable cable performance in the field, e.g., difficult cable handling and routing in the field. Flat cables are prone to twisting and kinking. If, on the other hand, a flat ribbon is placed in a round cable, the cable must be fairly large and bulky in order to fit the flat ribbon within a robust round structure. For example, a 12-fiber ribbon, made using 250 micron fibers, is typically 3.1 mm wide; placing jacketing and reinforcement over that ribbon leads to a round cable in excess of 5 mm in diameter: an undesirably large cable.

To address these problems with ribbon cable, some providers of multifiber connectors offer compact, round, indoor optical cables using unribboned, colored, loose, 250 micron fiber. Colored 250 micron fiber resembles the type of fiber often used in outside plant cables. The individual 250 micron fibers can be packed very tightly into a profile that is substantially round, thus allowing packaging of those fibers in a small round cable.

Prior art reference "US2008285924A1" discloses that Fibers are embedded and surrounded by acrylate resins.

Another prior art reference "EP2652536A2" discloses that optical fibers are embedded in acrylate resin.

Yet another prior art reference "CN1259677A" discloses multiple single fiber TB units connected together by webs.

However, none of the prior art references discloses structural limitations to reduce water ingression in the optical fiber cable.

Therefore, there is a need for an optical fiber cable that overcomes one or more limitations associated with the available optical fiber cables.

Thus, the present disclosure proposes a technical solution that overcomes the above-stated limitations in the prior arts by providing an optical fiber cable with multi-fibre tight-buffered unit.

### SUMMARY OF THE DISCLOSURE

Embodiments of the present disclosure relates to an optical fiber cable comprising:
a plurality of optical fibers ;
a thermoplastic layer extruded over the plurality of optical fibers to form an optical unit such that the thermoplastic layer contacts a surface area in a range of 50% to 95% of each optical fiber of the plurality of optical fibers; and
a sheath that surrounds the optical unit.

According to the first aspect of the present disclosure, one or more optical fibers of the plurality of optical fibers is coated with a water blocking coating.

According to the second aspect of the present disclosure, the optical unit has an outer diameter in a range of 700 micrometres (µm) to 1000 µm. In particular, the plurality of optical fibers (102) has 3 optical fibers to 6 optical fibers.

According to the third aspect of the present disclosure, the optical unit is made up of a material selected from one of, nylon, Polyvinyl chloride (PVC), Thermoplastic Polyurethane(TPU), and Low-Smoke Zero-Halogen (LSZH or LSOH).

According to the fourth aspect of the present disclosure, optical fiber cable further comprising one or more layers disposed between the sheath and the optical unit. The one or more layers is one of, water swellable yarns, thermoplastic layer (tube, inner sheath), water blocking tape (WBT), tensile yarn layer, armor layer (metal and/or dielectric), fire retardant tape, or a combination thereof.

According to the fifth aspect of the present disclosure, the optical unit is free of any additional solid, liquid, and semi-solid material between the plurality of optical fibers and the thermoplastic layer. In particular, the optical unit has an empty space in a range of 0.5% to 3%.

According to the sixth aspect of the present disclosure, when
(i) the optical unit is 3 fibers optical unit, the surface area of each optical fiber of the plurality of optical fibers in contact with the thermoplastic layer is greater than 70% and less than 95%,
(ii) the optical unit is 4 fibers optical unit, the surface area of each optical fiber of the plurality of optical fibers in contact with the thermoplastic layer is greater than 60% and less than 95%,
(iii) the optical unit is a 6 fibers optical unit, the surface area of each optical fiber of the plurality of optical fibers in contact with the thermoplastic layer is greater than 50% and less than 95%.

According to the seventh aspect of the present disclosure, optical fiber cable comprising a plurality of optical fibers, a thermoplastic layer extruded over the plurality of optical fibers to form an optical unit such that the thermoplastic layer in partial contact with each optical fiber of the plurality of optical fibers wherein the optical unit does not have any material other than the plurality of optical fibers and the thermoplastic layer; and a sheath that surrounds the optical unit.

The foregoing objectives of the present disclosure are attained by providing an optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross-sectional view of an optical fiber cable in accordance with an embodiment of the present disclosure;
Fig. 2 is a pictorial snapshot illustrating a cross-sectional view of another optical fiber cable in accordance with an embodiment of the present disclosure;
Fig. 3 is a pictorial snapshot illustrating a cross-sectional view of yet another optical fiber cable in accordance with an embodiment of the present disclosure.

The optical fiber illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides highspeed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

The term "optical fiber cable" as used herein refers to a cable that encloses a plurality of optical fibers.

The term "extrusion" as used herein refers to a process used to create the objects with a fixed cross-sectional profile such as a rod or a cylindrical tube. A hot molten material such as thermoplastic is pushed through a die with the desired cross-section and cooled down to attain the required shape.

The term "empty space" as used herein refers to a cross-sectional area of non-solid space present inside an optical unit to optical unit's cross-sectional are with outer diameter. Further, the empty space may be a free space created between the optical fibers due to the geometry and/or arrangement of the plurality of optical fibers.

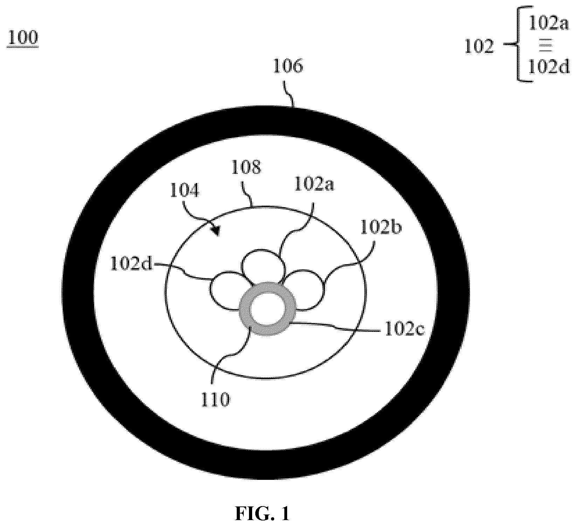

Fig. 1 is a pictorial snapshot illustrating a cross-sectional view of an optical fiber cable in accordance with an embodiment of the present disclosure. The optical fiber cable 100 may have a plurality of optical fibers 102 of which first through fourth optical fibers 102a-102d are shown, a thermoplastic layer 104, and a sheath 106. The plurality of optical fibers 102 may have 3 optical fibers to 6 optical fibers. Aspects of the present disclosure are intended to include and/or otherwise cover any number of optical fibers in the plurality of optical fibers 102 with the range of 3 optical fibers to 6 optical fibers, without deviating from the scope of the present disclosure.

The thermoplastic layer 104 may be extruded over the plurality of optical fibers 102 to form at least one optical unit 108 (hereinafter interchangeably referred to and designated as "a multi fibre tight buffered (TB) unit 108" and "the optical unit 1 08"). As illustrated, the optical fiber cable 100 has the plurality of optical fibers 102 surrounded by the thermoplastic layer 104 such that the plurality of optical fibers 102 has substantially no empty space therebetween.

In particular, the thermoplastic layer 104 may contact a surface area in a range of 50% to 95% of each optical fiber of the plurality of optical fibers 102. Moreover, the thermoplastic layer 104 may contact each optical fiber of the plurality of optical fibers 102 (i.e., the first through fourth optical fibers 102a-102d) such that the surface area of each optical fiber of the plurality of optical fibers 102 (i.e., the first through fourth optical fibers 102a-102d) in contact with the thermoplastic layer 104 is in a range of 50% to 95%. Further, when the plurality of optical fibers 102 has 3 optical fibers (i.e., the optical unit 108 is 3 fibers optical unit), the surface area of each optical fiber of the plurality of optical fibers 102 in contact with the thermoplastic layer 104 is greater than 70% and less than 95%.

In another aspect of the present disclosure, when the plurality of optical fibers 102 has 4 optical fibers (i.e., the optical unit 108 is 4 fibers optical unit), the surface area of each optical fiber of the plurality of optical fibers 102 in contact with the thermoplastic layer 104 is greater than 60% and less than 95%.

In yet another aspect of the present disclosure, when the plurality of optical fibers 102 has 6 optical fibers (i.e., the optical unit 108 is 6 fibers optical unit), the surface area of each optical fiber of the plurality of optical fibers 102 in contact with the thermoplastic layer 104 is greater than 50% and less than 95%.

In different aspects of the present disclosure, the optical unit 108 may be free of any additional solid, liquid, and semi-solid material between the plurality of optical fibers 102 and the thermoplastic layer 104.

In accordance with an embodiment of the present disclosure, the thermoplastic layer 104 may be made up of, but not limited to, nylon, Polyvinyl chloride (PVC), Thermoplastic Polyurethane(TPU), Low-Smoke Zero-Halogen (LSZH or LSOH), and the like. Aspects of the present disclosure are intended to include and/or otherwise cover any type of the thermoplastic material, without deviating from the scope of the present disclosure.

In accordance with an embodiment of the present disclosure, the optical unit 108 that encloses the plurality of optical fibers 102 together may have a diameter in a range of 700 micrometres (µm) to 1000 µm. Particularly, the diameter of the optical unit 108 may be 900 µm. Alternatively, the diameter of the optical unit 108 may be the a range of 700 µm to 1000 µm due to the reason that the optical unit 108 having a diameter of less than 700 µm and with minimum 3 optical fibers will have very less thickness of the material. Further, the optical unit 108 with diameter of less than 700 µm may fail to produce required mechanical resistance to crush, impact, and abrasion. On the other hand, the optical unit 108 with a diameter of greater than 1000 µm will have space constraints in a low diameter FTTx cable design.

In accordance with an embodiment of the present disclosure, the optical unit 108 may have very less empty space therein. In particular, the empty space in the optical unit 108 may be in a range of 0.5% to 3%. Moreover, the empty space in the optical unit 108 may be in a range of 0.5% to 3% due to the reason that when the empty space in the optical unit 108 is less than 0.5%, the mechanical stability of the optical unit 108 may be distorted. On the other hand, when the empty space in the optical unit 108 is greater than 3%, the optical unit 108 will have extra space to penetrate water in operations and also may introduce mechanical instability in the multi fiber design of the optical fiber cable 100.

In accordance with an embodiment of the present disclosure, the optical unit 108 may be adapted to provide mechanical protection to the plurality of optical fibers 102. In particular, the optical unit 108 may be adapted to prevent water ingression as the optical unit 108 has very less empty space inside. Moreover, the surface area of each optical fiber of the plurality of optical fibers 102 in contact with the thermoplastic layer 104 is in the range of 50% to 95% as below 50%, the empty space inside the optical unit 108 will be higher, that may lead to water leak during water penetration test. Further, when the surface area of each optical fiber of the plurality of optical fibers 102 in contact with the thermoplastic layer 104 is greater than 95% then mechanical stability of the optical unit 108 will be distorted i.e. the reduction in bending performance of the fiber unit and increase in optical loss during handling.

As illustrated, a maximum open ended surface area of the plurality of optical fibers 102 is covered by the thermoplastic material that is extruded on the plurality of optical fibers 102 such that the thermoplastic material enhances the mechanical protection to the plurality of optical fibers 102 by increasing a crush and impact resistance of the optical unit 108. Further, thickness of the thermoplastic material over the plurality of optical fibers remains higher that enhances environmental protections such as thermal cycling and aging of the optical fiber cable 100.

In accordance with an embodiment of the present disclosure, one or more optical fibers of the plurality of optical fibers 102 may be coated with a water blocking coating. For example, when the plurality of optical fibers 102 has four optical fibers i.e., the first through fourth optical fibers 102a-102d, the first optical fiber 102a (i.e., one optical fiber) may be coated with the water blocking coating.

In another example, when the plurality of optical fibers 102 has four optical fibers i.e., the first through fourth optical fibers 102a-102d, the first and second optical fibers 102a and 102b (i.e., two optical fibers) may be coated with the water blocking coating.

In yet another example, when the plurality of optical fibers 102 has four optical fibers i.e., the first through fourth optical fibers 102a-102d, the first through third optical fibers 102a-102c (i.e., three optical fibers) may be coated with the water blocking coating.

In another example, when the plurality of optical fibers 102 has four optical fibers i.e., the first through fourth optical fibers 102a-102d, the first through fourth optical fibers 102a-102d (i.e., four optical fibers) may be coated with the water blocking coating.

In accordance with an embodiment of the present disclosure, one or more optical fibers of the plurality of optical fibers 102 may be without a water blocking coating. In some aspects of the present disclosure, to enhance a water blocking capability of the optical unit 108, at least one optical fiber of the plurality of optical fibers 102 may be covered with a water swellable coating.

The sheath 106 may surround the optical unit 108 and may be an outermost layer of the optical fiber cable 100 that surrounds the optical unit 108 and may provide support, strength, and insulation to the optical fiber cable 100. In particular, the sheath 106 may facilitate to reduce abrasion and to provide the optical fiber cable 100 with extra protection against external mechanical effects such as crushing. Further, the sheath 106 may be made up of a material a thermoplastic material such as, but not limited to, Polyethylene (PE) material, Low-Smoke Zero-Halogen (LSZH) material, Polyvinyl Chloride (PVC) material, polyamide (PA) material, and the like. Aspects of the present disclosure are intended to include and/or otherwise cover any type of the material for the sheath 106, known to a person having ordinary skill in the art, without deviating from the scope of the present disclosure.

In accordance with an embodiment of the present disclosure, the optical fiber cable 100 may have one or more layers (not shown) disposed between the optical unit 108 and the sheath 106. In particular, the one or more layers may be, but not limited to, water swellable yarns, thermoplastic layer (tube, inner sheath), water blocking tape (WBT), tensile yarn layer, armor layer (metal and/or dielectric), fire retardant tape, and the like. Aspects of the present disclosure are intended to include and/or otherwise cover any type of the one or more layers disposed between the optical unit 108 and the sheath 106 without deviating from the scope of the present disclosure.

In accordance with an embodiment of the present disclosure, the optical fiber cable 100 may further have one or more ripcords (not shown) disposed between the optical unit 108 and the sheath 106. Particularly, the one or more ripcords may facilitate removal of the sheath 106 for accessing the optical unit 108 having the plurality of optical fibers 102 when the one or more ripcords are pulled to tear the sheath 106.

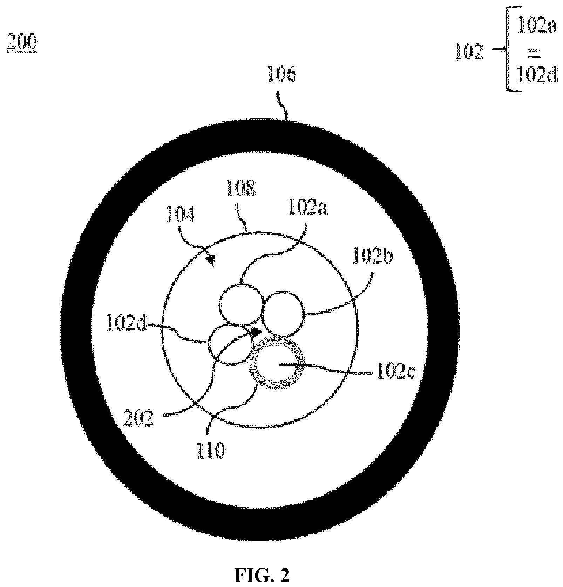

Fig. 2 is a pictorial snapshot illustrating a cross-sectional view of another optical fiber cable in accordance with an embodiment of the present disclosure. The optical fiber cable 200 is substantially similar to the optical fiber cable 100 with like elements referenced with reference numerals. However, the optical fiber cable 200 has different arrangement of the plurality of optical fibers 102 such that the plurality of optical fibers 102 surrounded by the thermoplastic layer 104 has an empty space 202 therebetween. As illustrated, the plurality of optical fibers 102 i.e., the first through fourth optical fibers 102a-102d may be disposed such that the first through fourth optical fibers 102a-102d defines the empty space 202 therebetween.

In accordance with an embodiment of the present disclosure, the optical unit 108 may have very little empty space (i.e., the empty space 202) therein. In particular, the empty space 202 in the optical unit 108 may be in the range of 0.5% to 3%. Moreover, the empty space 202 in the optical unit 108 may be in the range of 0.5% to 3% due to the reason that when the empty space 202 in the optical unit 108 is less than 0.5%, the mechanical stability of the optical unit 108 may be distorted. Further, when the empty space 202 in the optical unit 108 is greater than 3%, then the optical unit 108 will have extra space to penetrate water in operations and also may introduce mechanical instability in the multi fiber design of the optical fiber cable 200.

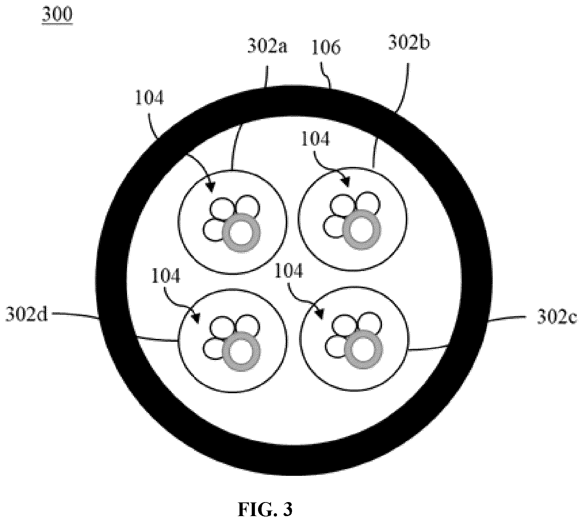

Fig. 3 is a pictorial snapshot illustrating a cross-sectional view of yet another optical fiber cable in accordance with an embodiment of the present disclosure. The optical fiber cable 300 has four optical units (i.e., the first through fourth optical units 302a-302d), it will be apparent to a person skilled in the art that the scope of the present disclosure is not limited to it.

In various different aspects, the optical fiber cable 300 may have any number of optical units, without deviating from the scope of the present disclosure. In such a scenario, each optical unit will be structurally and functionally similar to the optical fiber unit 108 of the optical fiber cable 100 as described above.

The optical fiber cable 100, 200, 300 of the present disclosure have the plurality of optical fibers 102, the thermoplastic layer 104, and the sheath 106. In particular, the plurality of optical fibers 102 may have 3 optical fibers to 6 optical fibers. The thermoplastic layer 104 may be pressure extruded over the plurality of optical fibers 102 to form at least one optical unit 108. The optical unit 108 may be adapted to prevent water ingression as the optical unit 108 has very less empty space inside. Moreover, the surface area of each optical fiber of the plurality of optical fibers 102 in contact with the thermoplastic layer 104 may be in the range of 50% to 95%. Further, the optical unit 108 provides better mechanical load protection, better environmental protection, and is easy to manufacture, than micromodules.

In accordance with an embodiment of the present disclosure, the optical fiber cable (100, 200, 300) comprising a plurality of optical fibers 102, a thermoplastic layer 104 extruded over the plurality of optical fibers 102 to form an optical unit 108 such that the thermoplastic layer 104 in partial contact with each optical fiber of the plurality of optical fibers 102 wherein the optical unit 108 does not have any material other than the plurality of optical fibers 102 and the thermoplastic layer 104 and a sheath 106 that surrounds the optical unit 108.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100, 200, 300) **characterized in that**:
a plurality of optical fibers (102);
a thermoplastic layer (104) extruded over the plurality of optical fibers (102) to form an optical unit (108) such that the thermoplastic layer (104) contacts a surface area in a range of 50% to 95% of each optical fiber of the plurality of optical fibers (102); and
a sheath (106) that surrounds the optical unit (108).

2. The optical fiber cable (100, 200, 300) of claim 1, wherein one or more optical fibers of the plurality of optical fibers (102) is coated with a water blocking coating (110).

3. The optical fiber cable (100, 200, 300) of claim 1, wherein the optical unit (108) has an outer diameter in a range of 700 micrometres (µm) to 1000 µm.

4. The optical fiber cable (100, 200, 300) of claim 1, wherein the plurality of optical fibers (102) has 3 optical fibers to 6 optical fibers.

5. The optical fiber cable (100, 200, 300) of claim 1, wherein the optical unit (108) is made up of a material selected from one of, nylon, Polyvinyl chloride (PVC), Thermoplastic Polyurethane(TPU), and Low-Smoke Zero-Halogen (LSZH or LSOH).

6. The optical fiber cable (100, 200, 300) of claim 1, further comprising one or more layers disposed between the sheath (106) and the optical unit (108).

7. The optical fiber cable (100, 200, 300) of claim 6, wherein the one or more layers is one of, water swellable yarns, thermoplastic layer (tube, inner sheath), water blocking tape (WBT), tensile yarn layer, armor layer (metal and/or dielectric), fire retardant tape, or a combination thereof.

8. The optical fiber cable (100, 200, 300) of claim 1, wherein the optical unit (108) is free of any additional solid, liquid, and semi-solid material between the plurality of optical fibers (102) and the thermoplastic layer (104).

9. The optical fiber cable (100, 200, 300) of claim 1, wherein the optical unit (108) has an empty space in a range of 0.5% to 3%.

10. The optical fiber cable (100, 200, 300) of claim 1, wherein, when (i) the optical unit (108) is 3 fibers optical unit, the surface area of each optical fiber of the plurality of optical fibers (102) in contact with the thermoplastic layer (104) is greater than 70% and less than 95%, (ii) the optical unit (108) is 4 fibers optical unit, the surface area of each optical fiber of the plurality of optical fibers (102) in contact with the thermoplastic layer (104) is greater than 60% and less than 95%, (iii) the optical unit (108) is 6 fibers optical unit, the surface area of each optical fiber of the plurality of optical fibers (102) in contact with the thermoplastic layer (104) is greater than 50% and less than 95%.

11. An optical fiber cable (100, 200, 300) **characterized in that**:
a plurality of optical fibers (102);
a thermoplastic layer (104) extruded over the plurality of optical fibers (102) to form an optical unit (108) such that the thermoplastic layer (104) in partial contact with each optical fiber of the plurality of optical fibers (102), wherein the optical unit (108) does not have any material other than the plurality of optical fibers (102) and the thermoplastic layer (104); and
a sheath (106) that surrounds the optical unit (108).

12. The optical fiber cable (100, 200, 300) of claim 11, wherein the optical unit (108) has an outer diameter in a range of 700 micrometres (µm) to 1000 µm.

13. The optical fiber cable (100, 200, 300) of claim 11, wherein the optical unit (108) has an empty space in a range of 0.5% to 3%.

14. The optical fiber cable (100, 200, 300) of claim 11, further comprising one or more layers disposed between the sheath (106) and the optical unit (108), wherein the one or more layers is one of, water swellable yarns, thermoplastic layer (tube, inner sheath), water blocking tape (WBT), tensile yarn layer, armor layer (metal and/or dielectric), fire retardant tape, or a combination thereof.

15. The optical fiber cable (100, 200, 300) of claim 11, wherein, when (i) the optical unit (108) is 3 fibers optical unit, the surface area of each optical fiber of the plurality of optical fibers (102) in contact with the thermoplastic layer (104) is greater than 70% and less than 95%, (ii) the optical unit (108) is 4 fibers optical unit, the surface area of each optical fiber of the plurality of optical fibers (102) in contact with the thermoplastic layer (104) is greater than 60% and less than 95%, (iii) the optical unit (108) is 6 fibers optical unit, the surface area of each optical fiber of the plurality of optical fibers (102) in contact with the thermoplastic layer (104) is greater than 50% and less than 95%.
